# EUROPEAN PATENT SPECIFICATION

(11) **EP 0 550 447 B1**
(45) Date of publication and mention of the grant of the patent: **12.10.1994**
(21) Application number: 91914024.4
(22) Date of filing: 26.07.1991
(51) Int. Cl.: B60K 41/04, F02D 41/04

(54) **A METHOD FOR CONTROLLING AN INTERNAL COMBUSTION ENGINE FITTED IN A MOTOR VEHICLE**
VERFAHREN ZUR STEUERUNG EINES VERBRENNUNGSMOTORS IN EINEM KRAFTFAHRZEUG
PROCEDE DE COMMANDE D'UN MOTEUR A COMBUSTION INTERNE MONTE DANS UNE AUTOMOBILE

(30) Priority: 28.09.1990 DE 4030667
(43) Date of publication of application: 14.07.1993
(73) Proprietor: AUDI AG, 85002 Ingolstadt (DE)
(72) Inventor: DUBA, Peter, D-8071 Lenting (DE); BYSZIO, Günther, D-8070 Ingolstadt (DE); HELL, Manfred, D-8072 Ingolstadt (DE); SCHWENKERT, Michael, D-8070 Ingolstadt (DE)
(74) Representative: Le Vrang, Klaus
(86) International application number: EP9101400
(87) International publication number: WO9205973

(56) References cited:
- NL-A- 8 303 345
- Patent Abstracts of Japan, vol. 11, no. 146 (M-587)(2593), May 13, 1987 & JP-A-61 279 751
- Patent Abstracts of Japan, vol. 7, no. 217 (M-245)(1362), September 27, 1983 & JP-A-58 112 826

## Description

The invention relates to a method for controlling an internal combustion engine fitted in a motor vehicle and comprising automatic gearing.

In electronically controlled automatic gearing, a so-called starter clutch is closed upon starting. This clutch is controlled solely hydraulically and cannot therefore be influenced electronically. The timing of the closing behaviour is essentially dependent upon the temperature of the gearing and the hydraulic oil.

In the event of high engine moments occuring at the moment of engaging the driving stage from the position N into the position D or from the position N into the position R as a result of acceleration prior to the engagement of the driving stage, then the starter clutch is subjected to a high degree of wear, particularly in the case of cold gearing, which results in long clutch closing times.

It is the object of the invention to reduce the wear of the clutch. This object is attained by way of the main claim.

According to the invention, immediately before the driving stage is engaged, a test is carried out in order to ascertain whether the engine moment exceeds a given threshold value, in which case the engine moment is reduced by interrupting the fuel supply.

The NL-A 83 03 345 is teaching a control system for an engine having an automatic gear in which the pressure of the gear oil is reduced under idle condition and only raised, if the automatic gear is in the drive position and simultaneously the vehicle itself is standing. Thereby the idle speed of the automatic gear is limited to a predetermined threshold.

The recognition of a high engine moment is effected by processing one or more of the following data:
- testing the load by means of an air mass measuring device
- testing the rotational speed
- testing a selector lever sensor, which indicates whether or not a driving stage is engaged.

In addition, the moment reduction is rendered dependent upon the driving velocity, the load and rotational speed at the moment of engagement of the driving stage, and the engine temperature.

If the load or rotational speed lie above a threshold value, whilst the vehicle velocity lies below a threshold value, then the engine moment is reduced for the engagement of the driving stage by momentarily interrupting the fuel injection. This interruption occurs for a defined period of time, namely so long as the rotational speed threshold is exceeded. The defined period of time is selected as a function of the temperature and corresponds approximately to the period of time until the closure of the clutch. In this respect, the rotational speed fluctuates around the engine temperature-dependent rotational speed threshold during this defined period of time.

Alternatively or in addition to the above, a test can be carried out to determine whether the starter clutch is closed. To this end, a further rotational speed threshold is tested. In this manner, it is ensured that the moment restriction is lifted as soon as the closed clutch is detected, so that the acceleration capacity of the vehicle does not suffer from the performance or moment reduction during the coupling procedure.

In order to recognise the closed clutch, the fuel interruption is immediately deactivated if the rotational speed falls below a further threshold, even If the above-mentioned defined period of time has not yet lapsed.

In this respect, it is expedient to activate the above-mentioned functions leading to a recognition of the closed clutch so long as the engine temperature falls within a first range, and to deactivate said functions as soon as the engine temperature falls within a further range.

The invention is explained in the following with reference to the drawings, in which:
- Fig. 1: is a schematic circuit diagram for carrying out the invention, and
- Fig. 2: shows an operating sequence.

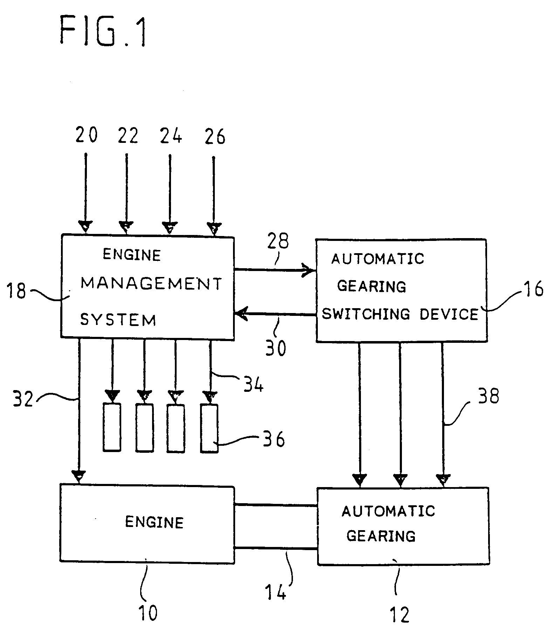

In Fig. 1, the reference number 10 designates a block representing the internal combustion engine of the motor vehicle. This internal combustion engine 10 is connected with an automatic gearing 12 via corresponding components 14. A clutch is associated with the automatic gearing 12.

For controlling the engine gearing unit a switching device 16 is provided for the automatic gearing as well as a conventional engine management system 18. Via inputs 20, 22, 24 and 26, the engine management system 18 receives data, relating amongst other things to the rotational speed, the velocity of the motor vehicle, the temperature of the engine and other characteristic operating values. A data exchange takes place between the engine management system 18 and the automatic gearing switching device 16 via data lines 28 and 30.

In addition, the engine management system 18 controls the internal combustion engine 10, for example via a line 32, which relays the ignition pulses, and via the actuation of the injection valves. The injection valves are schematically indicated by the reference number 36 and are actuated by the engine management system 18 via control lines 34.

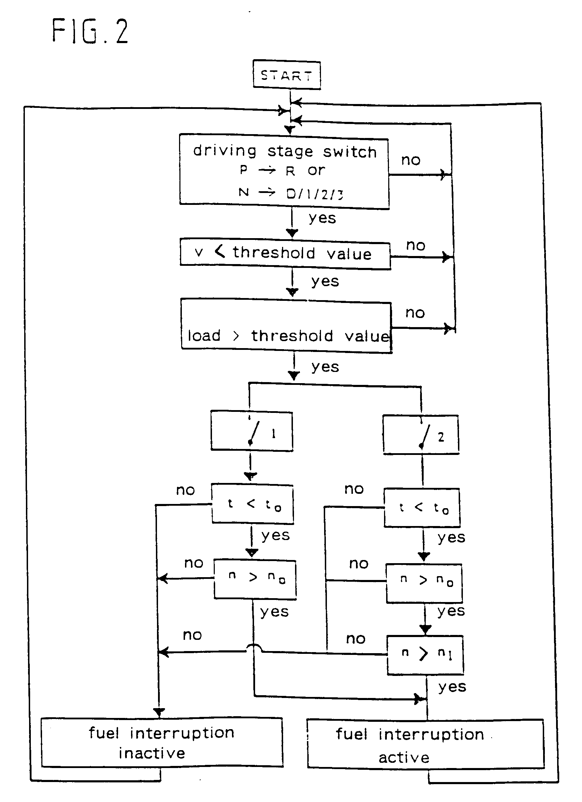

The operating sequence according to the invention of this schematic circuit diagram is illustrated in Fig. 2:

A first stage monitors whether the driving stage switch is engaged from the parking position into the reversing position or from the neutral position into a driving stage. This driving stage switch is usually the selector lever of the automatic gearing.

A second stage monitors whether the vehicle is set in motion, i.e. whether the velocity of the vehicle lies above a threshold value. In addition, it is necessary for the rotational speed and/or the load to exceed a minimum value in order to activate the engine moment reduction according to the invention.

One of two branches can then be activated. The actuation, schematically illustrated by the switches 1 and 2, can be dependent upon the engine temperature. If the engine temperature lies below a threshold value, then the first branch is activated, whereas if the engine temperature lies above a threshold value the second branch is activated. One of the two switches 1 or 2 is opened, the other switch closed in each case.

In both branches a timing stage is provided, which ensures that the fuel interruption for moment reduction only occurs for a period of time not exceeding a threshold value to. So long as the time does not exceed this threshold value, then the rotational speed is tested, which must lie above a first threshold value no in order for the fuel interruption to be activated.

The branches 1 and 2 differ in that a second rotational speed test takes place in the branch 2 to determine whether the starter clutch is closed. So long as the rotational speed does not exceed this second threshold value, the clutch is not yet closed. If the second rotational speed threshold is exceeded, then the fuel interruption is deactivated in all cases.

If the above conditions are fulfilled, measures are adopted for reducing the engine moment. To this end, the fuel injection can be reduced via the fuel injection valves, as illustrated by way of example in Fig. 1.

## Claims

1. A method for controlling an internal combustion engine (10) fitted in a motor vehicle comprising automatic gearing (12), wherein, upon detection of a manual shift into a driving range (R;D), a reduction of the engine moment is effected under consideration of the engine temperature, if the driving velocity (v) of the vehicle lies below a velocity threshold value,
characterised in that
the reduction of the engine moment is deactivated as soon as the engagement of the starter clutch is detected (n<n₁),
the reduction is effected by means of fuel interruption, and
the reduction of engine moment is carried out only if the load lies above a threshold value.

2. A method according to claim 1, characterised in that the fuel interruption is activated for a predeterminable period of time so long as the load do not fall below a threshold value.

3. A method according to claim 2, characterised in that the predeterminable period of time is selected as a function of the temperature.

4. A method according to claim 2, characterised in that the threshold value for load is selected as a function of the temperature.

## Patentansprüche

1. Verfahren zur Steuerung einer Brennkraftmaschine (10) in einem Kraftfahrzeug mit automatischem Getriebe (12), wobei bei Erfassung eines der Verschiebung eines Bedienhebels in einen Antriebsbereich (R; D) eine Reduzierung des Motormomentes unter Berücksichtigung der Motortemperatur bewirkt wird, falls die Antriebsgeschwindigkeit des Fahrzeuges unterhalb eines Schwellwertes liegt, dadurch gekennzeichnet, daß die Reduzierung des Motormomentes deaktiviert wird, sobald ein Eingriff der Starterkupplung erfaßt wird (n < n₁), die Reduzierung durch Unterbrechung der Brennstoffzufuhr bewirkt wird, und die Reduzierung des Motormomentes nur dann ausgeführt wird, wenn die Last unterhalb eines Schwellwertes liegt.

2. Verfahren nach Anspruch 1, dadurch gekennzeichnet, daß für einen vorgegebenen Zeitraum die Kraftstoffabschaltung aktiviert ist, solange die Lastschwelle unterschritten wird.

3. Verfahren nach Anspruch 2, dadurch gekennzeichnet, daß der vorgegebene Zeitraum temperaturabhängig gewählt ist.

4. Verfahren nach Anspruch 2, dadurch gekennzeichnet, daß der Schwellwert für Last und/oder Drehzahl temperaturabhängig gewählt ist.

## Revendications

1. Procédé pour la commande d'un moteur à combustion interne (10) équipant un véhicule à moteur muni d'une boîte automatique (12), dans lequel, lors de la détection d'un passage manuel dans une plage de marche (R; D), une réduction du couple du moteur est effectuée, en tenant compte de la température du moteur, si la vitesse de marche (v) du véhicule est inférieure à une valeur de seuil de vitesse,
caractérisé en ce que
la réduction du couple du moteur est désactivée dès que la mise en prise de l'embrayage de démarrage est détectée (n<n₁),
la réduction est effectuée au moyen de l'interruption de l'alimentation en carburant, et
la réduction du couple du moteur n'est effectuée que si la charge est supérieure a une valeur de seuil.

2. Procédé selon la revendication 1, caractérisé en ce que l'interruption de l'alimentation en carburant est rendue active pendant une période de temps prédéterminable, tant que la charge ne tombe pas au-dessous d'une valeur de seuil.

3. Procédé selon la revendication 2, caractérisé en ce que la période de temps predéterminable est choisie en fonction de la température.

4. Procédé selon la revendication 2, caractérisé en ce que la valeur de seuil pour la charge est choisie en fonction de la température.
